Europäisches Patentamt

European Patent Office

Office européen des brevets

(19)

(11) Veröffentlichungsnummer: **0 090 153**
**B1**

(12) **EUROPÄISCHE PATENTSCHRIFT**

(45) Veröffentlichungstag der Patentschrift:
14.05.86

(51) Int. Cl.⁴: **A 01 D 78/10**

(21) Anmeldenummer: **83101228.1**

(22) Anmeldetag: **09.02.83**

(54) **Universal-Kreiselheuwerbungsmaschine.**

(30) Priorität: **31.03.82 DE 3212012**

(43) Veröffentlichungstag der Anmeldung:
**05.10.83 Patentblatt 83/40**

(45) Bekanntmachung des Hinweises auf die Patenterteilung:
**14.05.86 Patentblatt 86/20**

(84) Benannte Vertragsstaaten:
**AT CH DE FR GB LI NL**

(56) Entgegenhaltungen:
**AT - B - 261 965**
**DE - A - 1 582 341**
**DE - A - 2 232 555**
**DE - B - 1 482 158**

(73) Patentinhaber: **Klöckner-Humboldt-Deutz AG
Zweigniederlassung Fahr, D-7702 Gottmadingen (DE)**

(72) Erfinder: **Wessel, Ulrich, Hilzingerstrasse 33,
D-7702 Gottmadingen (DE)**
Erfinder: **Eisenmann, Bernhard, Leipferdingerstrasse 12,
D-7708 Tengen 1 (DE)**

(74) Vertreter: **Patentanwälte Leinweber & Zimmermann,
Rosental 7/II Aufg., D-8000 München 2 (DE)**

ACTORUM AG

## Beschreibung

Die Erfindung betrifft eine Universal-Kreiselheuwerbungsmaschine, mit mindestens zwei nebeneinander angeordneten, gegenläufig antreibbaren Rechrädern, bestehend aus einem zur Drehachse des Rechrades koaxial angeordneten Befestigungsring, mehreren Zinkenträgern, die mit dem Befestigungsring um eine zur Drehachse parallele Achse schwenkbar verbunden sind, nach aussen ragende Federzinken tragen und durch ein Gelenkvieleck miteinander verbunden sind, das aus Koppelstangen besteht, mit deren Hilfe die Zinkenträger gleichzeitig in eine von zwei Grenzlagen verschwenkbar und in dieser verriegelbar sind, in der die Federzinken näherungsweise radial nach aussen bzw. entgegen der Drehrichtung des Rechrades nach hinten gerichtet sind.

Eine derartige Universal-Kreiselheuwerbungsmaschine kann sowohl zum Zetten als auch zum Schwaden verwendet werden. Zum Zetten werden alle Zinkenträger in derjenigen Grenzlage angeordnet und verriegelt, in der die Federzinken näherungsweise radial nach aussen gerichtet sind. Zum Schwaden werden die Zinkenträger hingegen in der anderen Grenzlage angeordnet und verriegelt, in der die Federzinken entgegen der Drehrichtung des Rechrades nach hinten gerichtet sind.

Bei der bekannten gattungsgemässen Kreiselheuwerbungsmaschine ist das Gelenkvieleck offen, d. h. dass zwei benachbarte Zinkenträger nicht unmittelbar durch eine Koppelstange miteinander verbunden sind. Wenn einer der Zinkenträger von der einen in die andere Grenzlage verschwenkt wird, dann wird diese Bewegung über die Koppelstangen auf alle übrigen Zinkenträger übertragen, so dass diese gleichfalls entsprechend verdreht werden. Um die Gesamtheit der Zinkenträger in der gewählten Grenzlage zu verriegeln, ist einem von ihnen eine Verriegelungseinrichtung zugeordnet. Diese Verriegelungseinrichtung besteht aus einem Steckbolzen, der mit entsprechenden Löchern des Zinkenträgers und des Befestigungsrings in Sperreingriff gebracht werden kann. Wenn der betreffende Zinkenträger mittels des Steckbolzens gegen eine Verschwenkung gegenüber dem Befestigungsring blockiert ist, dann sind alle anderen Zinkenträger über das von den Koppelstangen gebildete Gelenkvieleck gleichfalls gegen eine Verschwenkung blockiert. Diese bekannte Lösung hat jedoch in konstruktiver wie auch in funktioneller Hinsicht noch nicht voll befriedigt. Die passgerechte Anordnung der den Steckbolzen aufnehmenden Bohrungen oder Führungshülsen ist konstruktiv aufwendig und verteuert die Kreiselheuwerbungsmaschine. Noch schwerer ins Gewicht fällt jedoch die Tatsache, dass es im Betrieb verhältnismässig mühsam ist, die Zinkenträger in diejenige Relativstellung gegenüber dem Befestigungsring zu bewegen, in der die den Steckbolzen aufnehmenden Bohrungen genau fluchten. Hierbei ist zu berücksichtigen, dass beim gemeinsam erfolgenden Verschwenken der Zinkenträger ein verhältnismässig grosser Widerstand, nämlich die Reibung aller Lager überwunden werden muss, weshalb die Bewegung ruckartig erfolgt. Dadurch ist es nichg ganz einfach, die Bohrungen zur Deckung zu bringen.

Der Erfindung liegt die Aufgabe zugrunde, die gattungsgemässe Universal-Kreiselheuwerbungsmaschine hinsichtlich der Verstellung der Zinkenträger zu verbessern.

Erfindungsgemäss wird diese Aufgabe dadurch gelöst, dass das Gelenkvieleck geschlossen ist und dass der Gelenkpunkt mindestens einer der Koppelstangen längs derselben verstellbar ist.

Dadurch, dass das Gelenkvieleck geschlossen ist, sind die Zinkenträger in der jeweiligen Grenzlage zwangsweise blockiert, weil sich bei einem gemeinsamen Verschwenken der Zinkenträger der Durchmesser des Gelenkvielecks ändern müsste. Dies ist im Bedarfsfall aber möglich, weil der Gelenkpunkt einer Koppelstange längs derselben verstellt und deren wirksame Länge somit verändert werden kann.

Um bei einer gemeinsamen Verschwenkung der Zinkenträger eine Änderung des Durchmessers des Gelenkvielecks zu ermöglichen, ist vorzugsweise eine ausrückbare Koppelstange vorgesehen, die einen L-förmigen Schlitz mit einem längsgerichteten und einem dem Ende der Koppelstange benachbarten, quergerichteten Bereich aufweist, den ein am zugeordneten Zinkenträger und an der benachbarten Koppelstange angeordneter Gelenkbolzen durchsetzt.

An der ausrückbaren Koppelstange greift vorzugsweise im Bereich des L-förmigen Schlitzes eine diese zum Befestigungsring hin belastende Feder an. Dadurch wird erreicht, dass der querverlaufende Bereich des Schlitzes der ausrückbaren Koppelstange mit dem zugeordneten Gelenkbolzen in Eingriff gehalten wird. Das Gelenkvieleck ist daher in demjenigen Zustand blockiert, in welchem es seinen grössten Durchmesser aufweist.

In weiterer vorteilhafter Ausbildung der Erfindung ist vorgesehen, dass die Verbindungslinie der beiden Gelenkbolzen eines jeden Zinkenträgers in beiden Grenzlagen desselben gegenüber der Radiallinie in entgegengesetzten Richtungen geneigt ist. Da die Länge des Gelenkvielecks im verriegelten Zustand immer gleich ist, ergibt sich für beide Grenzlagen der Zinkenträger absolut gesehen der gleiche Tangentialwinkel gegenüber dem Befestigungsring. Durch die unsymmetrische Anordnung der Federzinken am Zinkenträger ist trotzdem in einer Stellung eine etwa radiale Zinkenstellung zur Drehachse des Rechrades möglich.

Weitere Einzelheiten, Vorteile und Merkmale der Erfindung ergeben sich aus der folgenden Beschreibung und der Zeichnung, auf die bezüglich der Offenbarung aller nicht im Text beschriebenen Einzelheiten ausdrücklich verwiesen wird. Es zeigen:

Fig. 1 eine Aufsicht auf ein Rechrad einer Universal-Heuwerbungsmaschine, wobei sich die Zinken in einer zum Schwaden geeigneten Stellung befinden;

Fig. 2 eine Darstellung ähnlich wie Fig. 1, wobei sich die Zinken jedoch in einer zum Zetten geeigneten Stellung befinden, und

Fig. 3 in grösserem Massstab die Einzelheit «A» in Fig. 1.

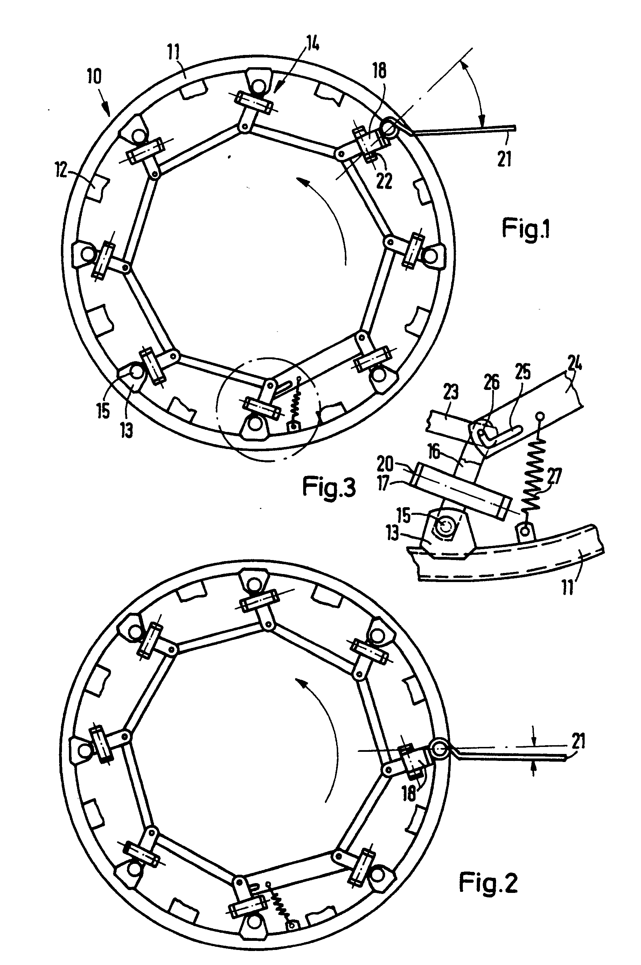

In den Fig. 1 und 2 ist ein Rechrad 10 einer Universal-Kreiselheuwerbungsmaschine gezeigt. Dieses Rechrad 10 hat einen äusseren Befestigungsring 11, der über Speichen 12 mit einem (nicht gezeigten) glockenförmigen Lagerbauteil verbunden ist. Das Lagerbauteil ist mit einer (nicht gezeigten) Antriebswelle verbunden, die zum Befestigungsring 11 konzentrisch ist. Die Neigung der Antriebswelle und damit des glockenartigen Lagerteils ist in bekannter Weise in Fahrtrichtung veränderbar, um die Relativstellung des Befestigungsrings 11 gegenüber der Oberfläche des zu bearbeitenden Bodens verändern zu können. Beim Schwaden soll der Befestigungsring gegenüber der Bodenoberfläche nur geringfügig geneigt sein, während er beim Zetten merklich nach vorne geneigt sein soll.

Am Befestigungsring 11 sind in gleichförmigen Winkelabständen Lagerböcke 13 befestigt. Bei dem gezeigten Ausführungsbeispiel haben die Lagerböcke 13 die Form einer Lasche, die mit dem Befestigungsring 11 verschweisst ist. Mit jedem dieser Lagerböcke 13 ist ein Zinkenträger 14 schwenkbar verbunden. Die Schwenkachse des Zinkenträgers 14 wird von einem zur Drehachse des Rechrades 10 näherungsweise parallelen Gelenkbolzen 15 gebildet, der in dem zugeordneten Lagerbock 13 angeordnet ist.

Jeder Zinkenträger 14 besteht aus einem Schwenkhebel 16, dessen radial äusseres Ende am zugeordneten Lagerbock 13 angelenkt ist, und aus einem Lagerbügel 17, der mit dem mittleren Bereich des Schwenkhebels 16 starr verbunden ist. Mit jedem Zinkenträger 14 ist ein Zinkenhalter 18 schwenkbar verbunden. Die Schwenkachse des Zinkenhalters 18 wird von einem Gelenkbolzen 20 gebildet, der in dem Lagerbügel 17 gelagert ist. Die Anordnung ist dabei so getroffen, dass alle Gelenkbolzen 20 in einer zur Drehachse des Rechrades 10 rechtwinkligen Ebene angeordnet sind.

An jedem Zinkenhalter 18 ist ein Zinken, vorzugsweise ein Doppelfederzinken 21 befestigt. Eine Torsionsfeder 22, die sich am Zinkenträger 14 und am Zinkenhalter 18 abstützt, belastet diesen in eine Stellung, in der der zugeordnete Federzinken 21 nach oben weist (Transportstellung). Wenn das Rechrad im Betrieb über die Antriebswelle und die Speichen 12 in Drehung versetzt wird, dann werden die Federzinken 21 unter dem Einfluss der Fliehkraft entgegen der Kraft der Torsionsfedern 22 um den Gelenkbolzen 20 nach aussen verschwenkt. Da die Hauptmasse der Federzinken 21, nämlich deren Federwicklungen, über den Gelenkbolzen 20 angeordnet ist, werden die Federzinken von der Fliehkraft so weit nach aussen verschwenkt, dass deren freie Enden unter dem Befestigungsring 11 liegen. In den Fig. 1 und 2 ist die Betriebsstellung der Federzinken 21 bei Rotation des Rechrades 10 gezeigt.

An den gabelförmig ausgebildeten, radial inneren freien Enden der Schwenkhebel 16 sind Koppelstangen 23 angelenkt, die ein geschlossenes Gelenkvieleck bilden. Eine Koppelstange ist besonders ausgebildet, damit das Gelenkvieleck unterbrochen werden kann. Zu diesem Zweck ist in einer ausrückbaren Koppelstange 24 ein L-förmiger Schlitz 25 angeordnet. Wie dies insbesondere aus Fig. 3 hervorgeht, erstreckt sich ein Bereich des Schlitzes 25 in Längsrichtung der Koppelstange 24, während sich der andere Bereich rechtwinklig zu der Koppelstange, d. h. zur Drehachse des Rechrades 10 hin erstreckt. An jedem Schwenkhebel 16 ist ein zur Drehachse des Rechrades 10 paralleler Gelenkbolzen 26 befestigt, der durch miteinander fluchtende Bohrungen der mit diesem Schwenkhebel verbundenen beiden Koppelstangen 23 hindurchragt. Im Falle der ausrückbaren Koppelstange 24 ragt der Gelenkbolzen 26 durch den L-förmigen Schlitz 25 hindurch. Eine Zugfeder 27 greift am Befestigungsring 11 und an der ausrückbaren Koppelstange 24 an, um diese radial nach aussen zu ziehen, so dass der Gelenkbolzen 26 am radial inneren Ende des näherungsweise radial verlaufenden Schenkels des L-förmigen Schlitzes 24 anliegt. Diese Feder ist jedoch nicht unbedingt erforderlich, weil bei der Rotation des Rechrades 10 auf die ausrückbare Koppelstange 24 eine nach aussen gerichtete Fliehkraft einwirkt, welche im Prinzip die gleiche Wirkung hat wie die Zugfeder 27.

Dass das von den Koppelstangen 23, 24 gebildete Gelenkvieleck eine bestimmte Länge hat, sind die in den Fig. 1 und 2 gezeigten Alternativstellungen der Schwenkhebel 16 in bezug auf die jeweilige Radialebene möglich. In Fig. 1 sind alle Schwenkhebel 16 gegenüber der Radialebene um den zugehörigen Gelenkbolzen 15 im Uhrzeigersinn verdreht, während in Fig. 2 alle Schwenkhebel 16 gegenüber der Radialebene um den zugehörigen Gelenkbolzen 15 um den gleichen Winkel im Gegenuhrzeigersinn verdreht sind. Da die Schwenkhebel 16 in beiden alternativen Schwenkstellungen mit der durch den Gelenkbolzen 15 und die Drehachse des Rechrades 10, d. h. durch das Zentrum des Gelenkvielecks gelegten Ebene einen spitzen Winkel einschliessen, sind sie in diesen Stellungen verriegelt.

Die Federzinken 21 sind in einer solchen Lage am Zinkenhalter 18 befestigt, dass sie mit dem Schwenkhebel 16 einen spitzen Winkel einschliessen. Genauer gesagt, die Federzinken 21 sind gegenüber dem zugehörigen Schwenkhebel 16 entgegen der Drehrichtung des Rechrades 10 derart verschwenkt, dass sie in der in Fig. 2 gezeigten Grenzlage des Schwenkhebels 16 näherungsweise radial gerichtet sind, wenn die inneren Gelenkbolzen 26 den äusseren Gelenkbolzen 15 in Drehrichtung des Rechrades 10 nacheilen. Die radiale Anordnung der Federzinken 21 ist für das Zetten geeignet. In der in Fig. 1 gezeigten Grenzlage der Schwenkhebel 16, in der deren innere Gelenkbolzen 26 den äusseren Gelenkbolzen 15 in Drehrichtung des Rechrades 10 vorauseilen, sind die Federzinken 21 hingegen gegenüber der entsprechenden Radialebene nach hinten verschwenkt. Diese Anordnung der Zinken ist für das Schwaden geeignet.

Wenn die Heuwerbungsmaschine von Schwadauf Zettbetrieb oder umgekehrt umgestellt werden soll, dann wird die ausrückbare Koppelstange 24 im Bereich des L-förmigen Schlitzes 25 radial nach innen gedrückt, so dass der Gelenkbolzen 26 im radialen Bereich des Schlitzes 25 nach aussen wandert und in den in Längsrichtung der Koppelstange 24 verlaufenden Bereich des Schlitzes 25 gelangt, so dass die Länge des Gelenkvielecks verkürzt bzw. dessen Durchmesser verkleinert werden kann. Daraufhin kann das Gelenkvieleck, d. h. die Gesamtheit der Koppelstangen 23, 24 in Umfangsrichtung verdreht werden, wobei alle Schwenkhebel 16 um den zugeordneten Gelenkbolzen 15 in die andere Grenzlage verschwenkt werden. Bei diesem Vorgang verringert sich der Durchmesser des von den Koppelstangen 23, 24 gebildeten Gelenkvielecks, bis alle Schwenkhebel 16 eine radiale Lage einnehmen, woraufhin sich der Durchmesser des Gelenkvielecks wieder vergrössert und der den Schlitz 25 der Koppelstange 24 durchragende Gelenkbolzen 26 vom längsgerichteten Bereich zum quergerichteten Bereich des Schlitzes 25 wandert. Daraufhin kann die ausrückbare Koppelstange 24 entweder manuell oder durch die Kraft der Feder 27 oder durch die beim Betrieb auftretende Fliehkraft nach aussen bewegt werden, so dass der quergerichtete Bereich des Schlitzes 25 den Gelenkbolzen 26 aufnimmt und das Gelenkvieleck gegen eine Verdrehung relativ zum Befestigungsring 11 blockiert ist.

Abweichend von der beschriebenen Ausführungsform wäre es auch möglich, die ausrückbare Koppelstange durch eine federnde Teleskopstange zu ersetzen. Wenn die Federzinken bzw. die Zinkenträger bei einem Wechsel von Zett- auf Schwadbetrieb oder umgekehrt mittels des Vielgelenks gemeinsam von einer Grenzlage in die andere verschwenkt werden, dann wird die Verkleinerung des Durchmessers des Vielgelenks durch eine Verkürzung der Teleskopstange ermöglicht. Sobald die Zinkenträger die Radialstellung überwunden haben, kann sich die Teleskopstange unter gleichzeitiger Erweiterung des Durchmessers des Gelenkvielecks wieder ausdehnen. Da die Feder der Teleskopstange bei einer Verkleinerung des Durchmessers des Gelenkvielecks komprimiert werden muss, sind die Zinkenträger in der jeweils eingestellten Grenzlage automatisch verriegelt.

Das Gelenkvieleck könnte auch ausserhalb der Gelenkbolzen 15, d. h. ausserhalb des Befestigungsrings 11 angeordnet sein. In diesem Fall müsste zum Verstellen der Schwenklage der Zinkenträger der Durchmesser des Gelenkvielecks vergrössert werden. Es müssten daher Vorkehrungen getroffen sein, damit sich die Länge mindestens einer Koppelstange im Bedarfsfall vergrössern lässt.

## Patentansprüche

1. Universal-Kreiselheuwerbungsmaschine mit mindestens zwei nebeneinander angeordneten, gegenläufig antreibbaren Rechrädern (10), bestehend aus einem zur Drehachse des Rechrades koaxial angeordneten Befestigungsring (11), mehreren Zinkenträgern (14), die mit dem Befestigungsring um eine zur Drehachse parallele Achse schwenkbar verbunden sind, nach aussen ragende Federzinken (21) tragen und durch ein Gelenkvieleck miteinander verbunden sind, das aus Koppelstangen (23, 24) besteht, mit deren Hilfe die Zinkenträger (14) gleichzeitig in eine von zwei Grenzlagern verschwenkbar und in dieser verriegelbar sind, in der die Federzinken (21) näherungsweise radial nach aussen bzw. entgegen der Drehrichtung des Rechrades nach hinten gerichtet sind, dadurch gekennzeichnet, dass das Gelenkvieleck geschlossen ist und dass der Gelenkpunkt mindestens einer der Koppelstangen (23, 24) längs derselben verstellbar ist.

2. Heuwerbungsmaschine nach Anspruch 1, dadurch gekennzeichnet, dass eine ausrückbare Koppelstange (24) einen L-förmigen Schlitz (25) mit einem längsgerichteten Bereich und einem dem Ende der Koppelstange benachbarten, quergerichteten Bereich aufweist, den ein am zugeordneten Zinkenträger (14) und an der benachbarten Koppelstange (23) angeordneter Gelenkbolzen (26) durchsetzt.

3. Heuwerbungsmaschine nach Anspruch 2, dadurch gekennzeichnet, dass an der ausrückbaren Koppelstange (24) im Bereich des L-förmigen Schlitzes (25) eine diese zum Befestigungsring (11) hin belastende Feder (27) angreift.

4. Heuwerbungsmaschine nach Anspruch 3, dadurch gekennzeichnet, dass die Verbindungslinie der beiden Gelenkbolzen (15, 26) eines jeden Zinkenträgers (14) in beiden Grenzlagen desselben gegenüber der Radialebene in entgegengesetzten Richtungen geneigt ist.

## Claims

1. A universal rotary hay-making machine having at least two rake wheels (10), disposed side by side and able to be driven in opposite directions, and comprising a securing ring (11) disposed coaxially with the rake wheel rotational axis, a plurality of tine carriers (14) which are pivotally connected to the securing ring about an axis parallel to the rotational axis, spring tines (21), carried by the tine carriers, projecting outwards and being inter-connected by a polygonal linkage of coupling rods (23, 24) by means of which the tine carriers (14) can be pivoted simultaneously into one of two limiting positions in which they can be locked, the spring tines (21) being directed approximately radially outwards or rearwardly counter to the direction of rake wheel rotation, characterised in that the polygonal linkage is closed and that the point of articulation of at least one of the coupling rods (23, 24) is adjustable there-along.

2. A hay-making machine according to claim 1, characterised in that a disconnectable coupling rod (24) has an L-shaped slot (25) with a longitudinal arm and, adjacent to the end of the coupling rod, a transverse arm through which extends a joint pin (26) disposed on the associated tine carrier (14) and on the adjacent coupling rod (23).

3. A hay-making machine according to claim 2, characterised in that a spring (27) acts on the disconnectable coupling rod (24) in the vicinity of the L-shaped slot (25) and loads this rod in the direction of the securing ring (11).

4. A hay-making machine according to claim 3, characterised in that the line connecting two joint pins (15, 26) of each tine carrier (14) is inclined in opposite directions, in relation to the radial plane, in the two limiting positions of the carrier.

**Revendications**

1. Machine centrifuge universelle pour la fenaison avec au moins deux roues de ratissage (10) pouvant être entraînées en sens opposé et disposées côte à côte, se composant d'une bague de fixation (11) disposée coaxialement à l'axe de rotation de la roue de ratissage, de plusieurs supports de dents (14) qui sont reliés de manière pivotante à la bague de fixation autour d'une axe parallèle à l'axe de rotation, qui portent des dents à ressort (21) faisant saillie vers l'extérieur et qui sont reliés les uns aux autres au moyen d'un polygone articulé, qui se compose de barres d'accouplement (23, 24), à l'aide desquelles les supports de dents (14) peuvent être pivotés simultanément à l'une de deux positions limites et y étre verrouillés, positions dans lesquelles les dents à ressort (21) sont dirigées approximativement radialement vers l'extérieur ou respectivement contre la direction de rotation de la roue de ratissage, vers l'arrière, caractérisée en ce que le polygone articulé est fermé et en ce que le point d'articulation d'au moins l'une des barres de couplage (23, 24) est réglable le long de celle-ci.

2. Machine pour la fenaison selon la revendication 1, caractérisée en ce qu'une barre de couplage (24) déclenchable présente une fente (25) en L avec une zone longitudinale et une zone transversale à proximité de l'extrémité de la barre de couplage, que traverse un axe d'articulation (26) disposé sur le support de dent (14) correspondant et sur la barre de couplage (23) voisine.

3. Machine pour la fenaison selon la revendication 2, caractérisée en ce qu'un ressort (27) agit sur la barre déclenchable de couplage (24) dans la zone de la fente (25) en forme de L, chargeant celle-ci vers la bague de fixation (11).

4. Machine pour la fenaison selon la revendication 3, caractérisé en ce que la ligne de jonction des deux axes d'articulation (15, 26) de chaque support de dent (14) est inclinée, aux deux positions limites de celui-ci, vis-à-vis du plan radial, dans des directions opposées.

Fig.1

Fig.3

Fig.2